# EUROPEAN PATENT APPLICATION

(11) **EP 4 624 138 A1**
(43) Date of publication of application: **01.10.2025**
(21) Application number: 25163458.0
(22) Date of filing: 13.03.2025
(51) Int. Cl.: B29C 65/10, B29C 65/36, B29C 65/50, B65B 9/20, B65B 51/26, B29K 705/02

(54) **SEALING UNIT FOR SEALING A TUBE OF PACKAGING MATERIAL FOR THE PRODUCTION OF PACKAGES CONTAINING A POURABLE PRODUCT**

(30) Priority: 29.03.2024 IT 202400007132
(71) Applicant: Tetra Laval Holdings & Finance S.A., 1009 Pully (CH)
(72) Inventor: FERRARI, Claudio, 41123 MODENA (IT); GHIRARDELLO, Roberto, 41123 MODENA (IT); MARSELLA, Angelo, 41123 MODENA (IT)
(74) Representative: Tetra Pak Patent Attorneys

(57) **Abstract**

There is described a sealing unit (6) for sealing a tube (3) of packaging material for the production of packages (2) containing a pourable product, the sealing unit (6) comprises: a sealing device (11) configured to be arranged in a position adjacent to the tube (3) and to provide the tube (3) with a longitudinal seal (12); and a position adjustment system (13) coupled with the sealing device (11) and configured to adjust a position of the sealing device (11) with respect to the tube (3).

## Description

### TECHNICAL FIELD

The present invention relates to a sealing unit for sealing a tube of packaging material for the production of packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer web of packaging material.

In particular, the web of packaging material is initially wound in a reel and fed through a plurality of unwinding rollers.

The web of packaging material is typically maintained in a closed, sterile environment, and, while advanced by the aforementioned unwinding rollers, is folded to form a continuous tube by means of a known web folding device. The tube is then sealed longitudinally, i.e. it is provided with a continuous longitudinal seal.

In order to perform the package forming operations, the tube is continuously fed along a straight vertical direction, is filled with the sterilized food product from above and is formed, sealed and subsequently cut along equally spaced transversal cross-sections extending along a direction orthogonal to the vertical direction, according to a manner known and not described in detail.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

In order to form the tube, the web folding device is configured to progressively fold the web from a sheet-like configuration to a C-shaped configuration and then into a substantially tubular shaped configuration whereby a first longitudinal edge of the web is partially superimposed on a second longitudinal edge of the web.

In order to provide the tube with the aforementioned longitudinal seal, the packaging machine comprises a sealing device configured to seal together the first longitudinal edge and the second longitudinal edge.

Opportunely, the sealing device is arranged in a fixed position with respect to the aforementioned straight vertical direction and with respect to a central axis of the tube.

According to a known configuration, the sealing device includes a sort of nozzle arranged adjacent to an outer surface of the tube, and in particular to the region of the tube in which the first longitudinal edge is superimposed onto the second longitudinal edge. The nozzle is configured to supply hot air at such region.

As it is known, a correctly formed longitudinal seal of the tube is crucial for a durable and robust sealing of the resulting packages.

Therefore, it is desirable that the sealing device is arranged in a correct position throughout the entire production process.

Although the known packaging machines are structurally and functionally valid, the Applicant has observed that it is also desirable to ease and improve the installation process of the known packaging machines, as well as to increase their adaptability and flexibility.

### DISCLOSURE OF INVENTION

It is therefore an object of the present invention to provide a sealing unit for sealing a tube of packaging material which is designed to meet at least one of the above-mentioned needs in a straightforward and low-cost manner.

This object is achieved by a sealing unit as claimed in the appended independent claim 1. Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine including a sealing unit according to the present invention;
Figure 2 is a perspective view, with parts removed for clarity, of a detail of the sealing unit of Figure 1; and
Figure 3 is a larger-scale perspective view of the sealing unit of Figure 2.

### BEST MODE FOR CARRYING OUT THE INVENTION

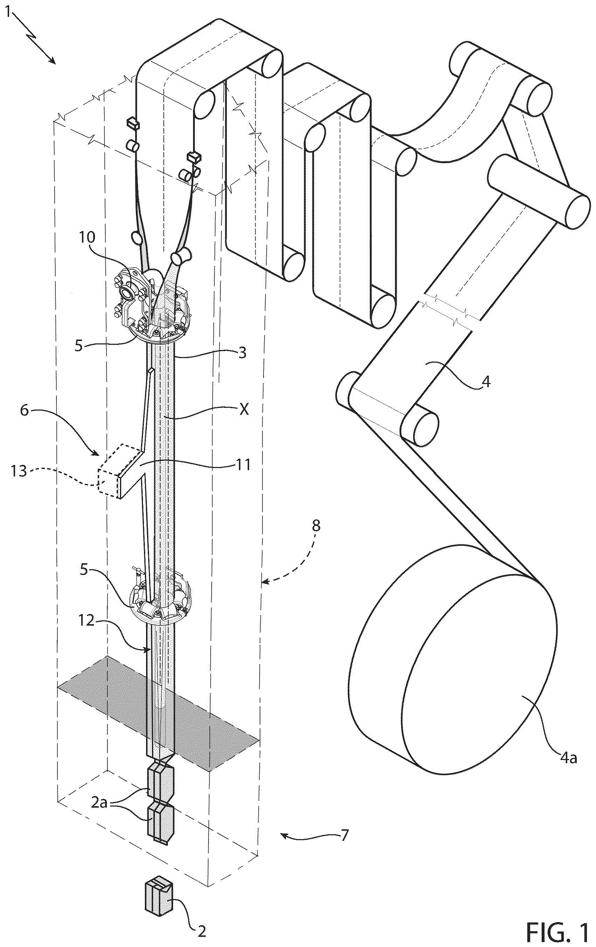

With reference to Figure 1, number 1 indicates as a whole a non-limiting example of a packaging machine configured for producing sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 4a, and then folded into a tube 3 of packaging material, according to a manner known and not described in detail.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

As schematically shown in Figure 1, packaging machine 1 comprises conveying means configured to advance the web 4 along an advancement path.

Packaging machine 1 comprises a web folding device 5 for progressively folding the advancing web 4 into a tube 3 of packaging material, in a manner known and not described in detail.

In particular, in order to form tube 3, web folding device 5 is configured to progressively fold web 4 from a sheet-like configuration to a C-shaped configuration and then into a substantially tubular shaped configuration whereby a first longitudinal edge of web 4 is partially superimposed on a second longitudinal edge of web 4.

Packaging machine 1 comprises a sealing unit 6 for longitudinally sealing tube 3 and which will be described in detail below.

Preferably, packaging machine 1 comprises a sterilization unit (not shown) configured for applying a sterilizing agent, for example containing hydrogen peroxide, on web 4 prior to its folding into tube 3.

Packaging machine 1 comprises a forming and sealing unit 7 for forming tube 3 by imparting a predetermined external shape, corresponding to a precursor of the shape of package 2, to successive longitudinal portions of tube 3, and for sealing tube 3 at equally spaced cross-sections (according to a manner known and not described in detail) .

Packaging machine 1 comprises an isolation chamber 8 internally defining an environment containing a controlled atmosphere, in particular sterile and/or aseptic gas, preferably sterile and/or aseptic air, and housing the forming and sealing unit 7 and the web folding device 5.

Packaging machine 1 comprises a filling system 10 (only partially shown) configured to fill tube 3 with the pourable product.

Preferably, forming and sealing unit 7 has a longitudinal axis X along which tube 3 is fed, in use.

In particular, such longitudinal axis X is parallel to a straight direction, which preferably is a straight vertical direction, as schematized in Figure 1.

Hence, in use, tube 3 is fed along the longitudinal axis X, downwards, and while being filled from above is formed and sealed by forming and sealing unit 7, according to a manner known and not described in detail.

More specifically, tube 3 is drawn (downwards) along the longitudinal axis X by forming and sealing unit 7 in a known manner.

In this way, a plurality of pillow packs 2a are obtained.

Packaging machine 1 further comprises a folding unit (known per se and not shown) for folding the pillow packs 2a, thereby obtaining packages 2, according to a manner known and not described in detail.

Sealing unit 6 comprises a sealing device 11 configured to be arranged (in use) in a position adjacent to tube 3.

In particular, sealing device 11 is arranged in a position along longitudinal axis X.

Sealing device 11 is configured to provide tube 3 with a longitudinal seal 12 (Figure 1).

In particular, in order to provide tube 3 with longitudinal seal 12, sealing device 11 is configured to seal together the aforementioned first longitudinal edge of web 4 and the aforementioned second longitudinal edge of web 4, which, as said, are superimposed onto one another by web folding device 5.

According to the non-limiting embodiment shown, sealing device 11 includes a nozzle 11a arranged adjacent to an outer surface 3a of tube 3, and in particular to the region of tube 3 in which the first longitudinal edge of web 4 is superimposed onto the second longitudinal edge of web 4. Nozzle 11a is configured to supply a jet of hot gas, preferably hot air, towards such region of tube 3.

In use, the jet of hot air heats up the outer heat-seal layer of web 4, both at the first longitudinal edge and at the second longitudinal edge, thereby causing a localized melting of the material of the respective heat-seal layers (and/or of a longitudinal strip applied on the first or second longitudinal edge), which thereby fuse with one another.

Longitudinal seal 12 is thereby obtained, which extends substantially parallel to longitudinal axis X.

More precisely, longitudinal seal 12 extends substantially parallel to a first direction A, which first direction A is then parallel to longitudinal axis X.

According to an alternative embodiment not shown, sealing device 11 may include an induction heating device configured to heat up the heat-seal layers by means of electromagnetic induction, exploiting the presence of the gas-barrier aluminum layer and according to a manner known and not described in detail.

Accordingly, in such a case sealing device 11 comprises an electromagnetic inductor instead of nozzle 11a.

According to an aspect of the present disclosure, sealing unit 6 comprises a position adjustment system 13 coupled, in particular mechanically and/or kinetically coupled, to sealing device 11 and configured to adjust a position of sealing device 11, in particular with respect to tube 3 and/or a fixed frame 14.

More specifically, adjustment system 13 is configured to be actuated for adjusting a position of sealing device 11 with respect to tube 3.

In other words, sealing unit 6 is configured such that sealing device 11 is movable with respect to tube 3 by actuation of position adjustment system 13.

In practice, sealing device 11 is movable, by means of position adjustment system 13, with respect to longitudinal axis X.

Sealing unit 6 comprises a fixed frame 14, which is fixed to a frame of packaging machine 1 and is fixed with respect to axis X of tube 3.

Conveniently, sealing device 11 is coupled to fixed frame 14 via position adjustment system 13.

In detail, position adjustment system 13 is configured to adjust the position of sealing device 11 with respect to fixed frame 14.

In one embodiment, position adjustment system 13 is configured to control a rotation of sealing device 11 with respect to at least one rotational degree of freedom thereof.

In addition or in alternative, position adjustment system 13 is configured to control a translation of sealing device 11 with respect to at least one translational degree of freedom thereof.

Preferably, position adjustment system 13 is configured to control both a rotation and a translation of sealing device 11.

In one embodiment, position adjustment system 13 comprises a first rotational adjusting device 15 configured to control a first rotational movement of sealing device 11 about first direction A.

In one embodiment, position adjustment system 13 comprises a second rotational adjusting device 16 configured to control a second rotational movement of sealing device 11 about a second direction B orthogonal to first direction A.

In one embodiment, position adjustment system 13 comprises a third rotational adjusting device 17 configured to control a third rotational movement of sealing device 11 about a third direction C orthogonal to first direction A and to second direction B.

It is noted that each one of the first rotational adjusting device, second rotational adjusting device and third rotational adjusting device may be provided alone or in combination with any other(s) of the rotational adjusting devices. In other words, terms "first", "second, "third" merely distinguish each rotational adjusting device from the other rotational adjusting devices disclosed therein, but do not imply any mandatory link or order among them.

In light of the above, position adjustment system 13 is able to control a rotation of sealing device 11 with respect to the three rotational degrees of freedom of sealing device 11.

Conveniently, each one of the first rotational adjusting device 15, second rotational adjusting device 16 and third rotational adjusting device 17 comprises a screw member actuatable in rotation to vary an angular position of sealing device 11 with respect to first direction A, second direction B or third direction C, respectively.

Preferably, each screw member comprises a bolt element adapted to receive a wrench, so that the rotational position adjustment of sealing device 11 can be performed in a simple manner.

Conveniently, the first rotational adjusting device 15 and/or the second rotational adjusting device 16 and/or the third rotational adjusting device 17 comprises a respective elastic member, in particular a spring 50, associated with the respective screw member and configured to bias the screw member in its current position.

More specifically, each screw member is maintained in its current position by the respective spring 50.

By actuating the screw member, the respective spring 50 is released and the angular position of the screw member can be varied.

Once the regulation is over, the spring 50 maintains the screw member in the new position.

Advantageously, at least one, and preferably each one of the first rotational adjusting device 15, second rotational adjusting device 16 and third rotational adjusting device 17 includes indicator means 18 for indicating a current (i.e. actual) angular position of sealing device 11 with respect to an angular reference position thereof, relative to the respective rotational degree of freedom or relative to tube 3.

In a preferred embodiment, indicator means 18 include a vernier scale (or nonius).

In this way, the angular movement and positioning of sealing device 11 relatively to each one of the first direction A, second direction B and third direction C, i.e. relatively to each rotational degree of freedom of sealing device 11, can be easily and effectively controlled.

Furthermore, the presence of indicator means 18 significantly reduces the risk of errors and allows for a fine regulation of the position of sealing device 11 with respect to its rotational degrees of freedom.

In one embodiment, position adjustment system 13 comprises a first translational adjusting device 19 configured to control a first translational movement of sealing device 11 along first direction A.

In one embodiment, position adjustment system 13 comprises a second translational adjusting device 20 configured to control a second translational movement of sealing device 11 along second direction B.

In one embodiment, position adjustment system 13 comprises a third translational adjusting device 21 configured to control a third translational movement of sealing device 11 along third direction C.

It is noted that each one of the first translational adjusting device, second translational adjusting device and third translational adjusting device may be provided alone or in combination with any other(s) of the translational adjusting devices. In other words, terms "first", "second, "third" merely distinguish each translational adjusting device from the other translational adjusting devices disclosed therein, but do not imply any mandatory link or order among them.

In detail, first direction A is a direction substantially parallel to axis X of tube 3; third direction C is a direction extending perpendicular to first direction A and to outer surface 3a of tube 3, i.e. extending towards and away from outer surface 3a; second direction B is a direction perpendicular to first direction A and third direction C.

In light of the above, position adjustment system 13 is able to control a translation, i.e. a linear position, of sealing device 11 with respect to the three translational degrees of freedom of sealing device 11.

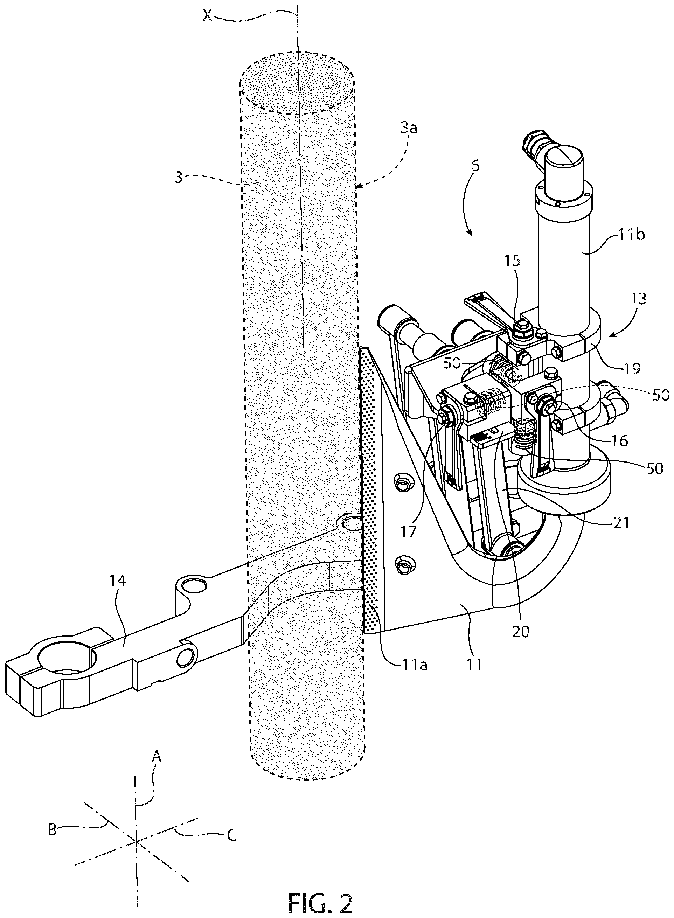

As visible in Figure 2, sealing device 11 includes a feeding pipe 11b configured to supply air from a known source to nozzle 11a.

Opportunely, such air is heated before being directed towards tube 3, for example by means of electric heaters.

In one embodiment, the air is heated at a position interposed between feeding pipe 11b and nozzle 11a.

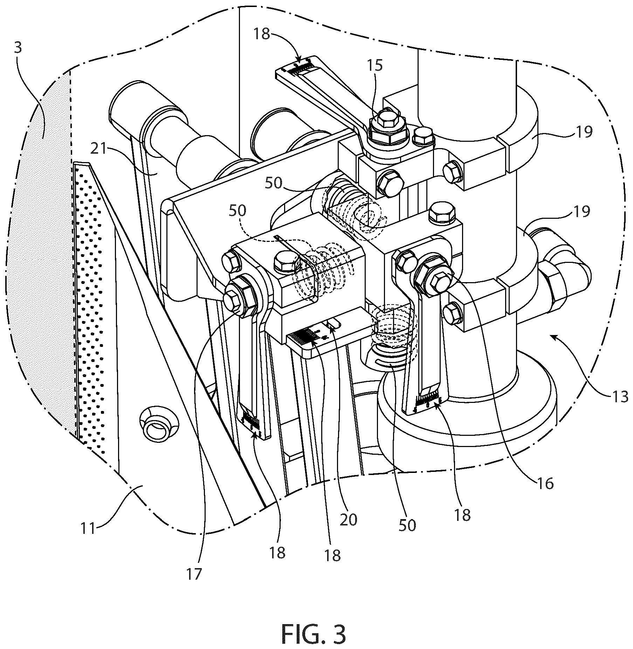

Preferably, first translational adjusting device 19 includes a pair of clamps (Figures 2 and 3) coupled to feeding pipe 11b and configured to be controlled between a clamping configuration, in which they retain feeding pipe 11b thereby defining a fixed position thereof along first direction A, and a releasing configuration, in which they allow a movement, and therefore a position adjustment, of feeding pipe 11b along first direction A.

Preferably, second translational adjusting device 20 includes an elongated slot, which extends along second direction B, and a pin movably engaging the elongated slot. In detail, the elongated slot defines a guide rail for the pin. By sliding the pin along the elongated slot, a position of sealing device 11 along second direction B can be controlled. The pin can be screwed against a support plate defining the elongated slot, thereby determining a fixation of the chosen position of the pin along the elongated slot.

Preferably, third translational adjusting device 21 includes a lever mechanism, only partially shown. Preferably, said lever mechanism is configured to be actuated by an actuator (not shown), such as a pneumatic actuator or an electric motor, configured to be automatically controlled.

In other words, sealing unit 6 comprises an actuator configured to automatically control said third translational movement.

Opportunely, the lever mechanism is configured such that sealing device 11 can be (automatically) moved towards and away from outer surface 3a of tube 3, i.e. along third direction C, by actuation of the aforementioned actuator.

More in general, the third translational movement allows for moving sealing device 11, and in particular nozzle 11a, towards and away from outer surface 3a of tube 3.

Advantageously, at least one, and preferably each one of the first translational adjusting device 19, second translational adjusting device 20 and third translational adjusting device 21 includes indicator means 18 for indicating a current linear position of sealing device 11 with respect to a linear reference position thereof relative to the respective translational degree of freedom or with respect to tube 3.

In a preferred embodiment, indicator means 18 include a vernier scale (or nonius).

In this way, the translational movement and positioning of sealing device 11 along each one of the first direction A, second direction B and third direction C, i.e. relatively to each translational degree of freedom of sealing device 11, can be easily and effectively controlled.

Furthermore, the presence of indicator means 18 significantly reduces the risk of errors and allows for a fine position adjustment of sealing device 11 with respect to its translational degrees of freedom.

In light of the foregoing, position adjustment system 13 comprises at least one adjusting device 15, 16, 17, 19, 20, 21 configured to control a rotation or a translation of sealing device 11 with respect to tube 3.

Such at least one adjusting device 15, 16, 17, 19, 20, 21 includes indicator means 18.

According to a further aspect of the present disclosure, sealing unit 6 is configured to be implemented in packaging machine 1 in a removable manner, for example only when an adjustment of the position of sealing device 11 is needed, thereby defining a (preferably removable) kit for adjusting the position of a sealing device 11 configured for providing a tube 3 of packaging material with a longitudinal seal 12.

In other words, sealing unit 6 defines a kit for adjusting the position of a sealing device 11 configured for providing a tube 3 of packaging material with a longitudinal seal 12, the kit being adapted to be implemented in a packaging machine 1 configured for the production of sealed packages 2 containing a pourable product starting from a web 4 of packaging material. The packaging machine 1 comprises a conveying device configured to advance the web 4, a web folding device 5 configured to fold the web 4 into a tube 3, and said sealing device 11. The kit is removably couplable to the packaging machine 1 and comprises a position adjustment system 13 couplable with the sealing device 11 and configured to adjust a position of the sealing device 11 with respect to the tube 3.

The advantages of sealing unit 6 according to the present invention will be clear from the foregoing description.

In particular, thanks to the presence of position adjustment system 13, sealing device 11 can be easily and effectively maintained in its nominal desired position, with respect to tube 3, throughout the production process.

Moreover, the installation process of sealing device 11 is significantly improved, since its positioning with respect to tube 3 is now simplified and highly repeatable. In this regard, position adjustment system 13 allows for a fine adjustment of the position of sealing device 11.

Moreover, the adaptability and flexibility of packaging machine 1 are improved, since a format change of packages 2 may be performed more rapidly.

Furthermore, downtimes of packaging machine 1 are significantly reduced, since position adjustment system 13 allows for a quick repositioning of sealing device 11 in its desired nominal position or in its new nominal position (depending on the actual operative conditions and on the actual position of tube 3, in use).

Clearly, changes may be made to sealing unit 6 and to packaging machine 1 as described herein without, however, departing from the scope of protection as defined in the accompanying claims.

## Claims

1. Sealing unit (6) for sealing a tube (3) of packaging material for the production of packages (2) containing a pourable product, the sealing unit (6) comprising:
- a sealing device (11) configured to be arranged in a position adjacent to the tube (3) and to provide the tube (3) with a longitudinal seal (12) extending parallel to a first direction (A); and
- a position adjustment system (13) coupled with the sealing device (11) and configured to adjust a position of the sealing device (11) with respect to the tube (3).

2. Sealing unit as claimed in claim 1, wherein the position adjustment system (13) is configured to control a rotation of the sealing device (11) with respect to at least one rotational degree of freedom thereof.

3. Sealing unit as claimed in claim 1 or 2, wherein the position adjustment system (13) is configured to control a translation of the sealing device (11) with respect to at least one translational degree of freedom thereof.

4. Sealing unit as claimed in claim 2 or 3, wherein the position adjustment system (13) comprises at least one adjusting device (15, 16, 17, 19, 20, 21) configured to control a rotation or a translation of the sealing device (11) with respect to the tube (3);
and wherein the at least one adjusting device (15, 16, 17, 19, 20, 21) includes indicator means (18) for indicating a current position of the sealing device (11) with respect to a reference position thereof or with respect to the tube (3).

5. Sealing unit as claimed in claim 4, wherein the indicator means (18) include a vernier scale.

6. Sealing unit as claimed in any one of the claims 3 to 5, wherein the position adjustment system (13) comprises a first rotational adjusting device (15) configured to control a first rotational movement of the sealing device (11) about the first direction (A).

7. Sealing unit as claimed in claim 6, wherein the position adjustment system (13) comprises a second rotational adjusting device (16) configured to control a second rotational movement of the sealing device (11) about a second direction (B) orthogonal to the first direction (A).

8. Sealing unit as claimed in claim 7, wherein the position adjustment system (13) comprises a third rotational adjusting device (17) configured to control a third rotational movement of the sealing device (11) about a third direction (C) orthogonal to the first direction (A) and to the second direction (B).

9. Sealing unit as claimed in any one of the claims 3 to 8, wherein the position adjustment system (13) comprises a first translational adjusting device (19) configured to control a first translational movement of the sealing device (11) along the first direction (A).

10. Sealing unit as claimed in claim 9, wherein the position adjustment system (13) comprises a second translational adjusting device (20) configured to control a second translational movement of the sealing device (11) along a second direction (B) orthogonal to the first direction (A).

11. Sealing unit as claimed in claim 10, wherein the position adjustment system (13) comprises a third translational adjusting device (21) configured to control a third translational movement of the sealing device (11) along a third direction (C) orthogonal to the first direction (A) and to the second direction (B), said third translational movement allowing for moving the sealing device (11) towards and away from an outer surface (3a) of the tube (3).

12. Sealing unit as claimed in claim 11, wherein the sealing unit (6) comprises an actuator configured to automatically control said third translational movement.

13. Sealing unit as claimed in any one of the foregoing claims, and comprising a fixed frame (14);
wherein the sealing device (11) is coupled to the fixed frame (14) via the position adjustment system (13), the position adjustment system (13) being configured to adjust the position of the sealing device (11) with respect to the fixed frame (14).

14. Packaging machine (1) for producing sealed packages (2) containing a pourable product starting from a web (4) of packaging material, the packaging machine (1) comprising:
- a conveying device for advancing the web (4) of packaging material;
- a web folding device (59) for folding the web (4) into a tube (3);
- a sealing unit (6) as claimed in any one of the foregoing claims.

15. Kit for adjusting the position of a sealing device (11) configured for providing a tube (3) of packaging material with a longitudinal seal (12), the kit being adapted to be implemented in a packaging machine (1) configured for the production of sealed packages (2) containing a pourable product starting from a web (4) of packaging material, the packaging machine (1) comprising a conveying device configured to advance the web (4), a web folding device (5) configured to fold the web (4) into the tube (3) and said sealing device (11), the kit being removably couplable to the packaging machine (1) and comprising a position adjustment system (13) couplable to the sealing device (11) and configured to adjust a position of the sealing device (11) with respect to the tube (3).
